# EUROPEAN PATENT APPLICATION

(11) **EP 4 692 002 A1**
(43) Date of publication of application: **11.02.2026**
(21) Application number: 23930749.9
(22) Date of filing: 13.09.2023
(51) Int. Cl.: C02F 1/52, B01D 21/01, B01D 61/58, C02F 1/44

(54) **APPARATUS AND METHOD FOR TREATING FLUORINE-CONTAINING WASTEWATER**

(30) Priority: 27.03.2023 JP 2023050168
(71) Applicant: Kurita Water Industries Ltd., Tokyo 164-0001 (JP)
(72) Inventor: TAJIKARA, Hiromichi, Tokyo 164-0001 (JP); NAKAZATO, Hirotoki, Tokyo 164-0001 (JP); ISHII, Kazuki, Tokyo 164-0001 (JP); TSUKAMOTO, Kazumi, Tokyo 164-0001 (JP)
(74) Representative: Hoffmann Eitle
(86) International application number: PCT/JP2023/033325
(87) International publication number: WO 2024/202117

(57) **Abstract**

The present invention provides an apparatus for treating fluorine-containing wastewater, said apparatus comprising: a first flocculation treatment means for subjecting fluorine-containing wastewater to a flocculation treatment with an inorganic flocculant and a calcium compound; a first precipitation treatment means for subjecting a flocculation reaction liquid from the first flocculation treatment means to precipitation and separation; a second flocculation treatment means for carrying out a flocculation treatment by adding an inorganic flocculant to at least a portion of treated water from the first precipitation treatment means; a clarification membrane device for subjecting a flocculation reaction liquid from the second flocculation treatment means to membrane separation treatment; a reverse osmosis membrane device for separating membrane permeate supplied from the clarification membrane device into permeate and concentrate; a means for taking out the permeate from the reverse osmosis membrane device; a third flocculation treatment means, installed separately from the first flocculation treatment means, for subjecting the concentrate from the reverse osmosis membrane device to a flocculation treatment with an inorganic flocculant; and a second precipitation treatment means for subjecting a flocculation reaction liquid from the third flocculation treatment means to precipitation and separation.

## Description

### Technical Field

The present invention relates to an apparatus and a method for treating fluorine-containing wastewater. The present invention particularly relates to an apparatus and a method for treating and recovering fluorine-containing wastewater through a flocculation treatment, a membrane separation treatment, etc.

### Background Technology

As an apparatus and a method for treating fluorine-containing wastewater discharged from manufacturing processes of liquid crystals or semiconductors, there is a two-stage precipitation treatment that includes a flocculation precipitation treatment with calcium salt, and further performs a flocculation precipitation treatment on the treated water with aluminum salt.

Patent Literatures 1 and 2 describe methods and apparatuses for further performing a membrane separation treatment on flocculation precipitation treated water of fluorine-containing wastewater.

In Patent Literature 1, fluorine-containing wastewater is flocculated with calcium salt and subjected to solid-liquid separation, this treated water is flocculated with iron salt and subjected to solid-liquid separation, and this treated water is subjected to an RO (reverse osmosis) treatment.

Patent Literature 1 describes a method in which a portion of the sludge after solid-liquid separation is introduced into a Ca reaction tank, a Ca compound is added to modify (increase density of) the sludge, and the modified sludge is returned and introduced into a flocculation reaction tank. This method is generally known as a density sludge method.

In Patent Literature 2, after fluorine-containing wastewater is subjected to a flocculation treatment with calcium salt, a precipitation treatment is performed, and this treated water is subjected to an RO treatment, and the permeate is extracted as treated water. The concentrate from the RO device is transferred to a flocculation tank. In the embodiment of FIG. 2 of Patent Literature 2, two series of flocculation and precipitation treatment lines are provided, in which the precipitation treated water from one series is subjected to an RO treatment and separated into permeate and concentrate, and this concentrate is transferred to a flocculation tank of the other series.

### Related Art Literature

### Patent Literatures

Patent Literature 1: Japanese Patent Application Laid-Open No. 2014-213264
Patent Literature 2: Japanese Patent Application Laid-Open No. 2018-143919

### SUMMARY OF INVENTION

### Problems to be Solved by the Invention

Since the flocculation precipitation treated water of fluorine-containing wastewater is in a state saturated with calcium fluoride, when treated with RO, calcium fluoride scale precipitates within a short time, causing the RO membrane to become clogged. Additionally, since the precipitation treated water contains colloids derived from flocculants and molecular flocculants, the RO membrane is easily clogged by these.

The present invention aims to provide an apparatus and a method for treating fluorine-containing wastewater that sufficiently suppress clogging of the RO membrane, improve the water quality of treated water, and enable recovery and reuse of RO treated water, in an apparatus and a method for treating fluorine-containing wastewater through a flocculation precipitation treatment and an RO (reverse osmosis) treatment, etc.

### Means for Solving the Problems

The summary of the apparatus and method for treating fluorine-containing wastewater of the present invention is as follows.
[1] An apparatus for treating fluorine-containing wastewater, including:
   a first flocculation treatment means which performs a flocculation treatment on fluorine-containing wastewater with an inorganic flocculant and a calcium compound; a first precipitation treatment means which subjects a flocculation reaction liquid from the first flocculation treatment means to precipitation separation;
   a second flocculation treatment means which adds an inorganic flocculant to at least a portion of treated water from the first precipitation treatment means and performs a flocculation treatment;
   a clarification membrane device which performs a membrane separation treatment on a flocculation reaction liquid from the second flocculation treatment means;
   a reverse osmosis membrane device to which membrane permeate of the clarification membrane device is supplied and which separates the membrane permeate into permeate and concentrate;
   a means which extracts permeate from the reverse osmosis membrane device;
   a third flocculation treatment means which is installed separately from the first flocculation treatment means and performs a flocculation treatment on concentrate from the reverse osmosis membrane device with an inorganic flocculant; and a second precipitation treatment means which subjects a flocculation reaction liquid from the third flocculation treatment means to precipitation separation.
[2] The apparatus for treating fluorine-containing wastewater according to [1], including a bypass means for sending treated water from the first precipitation treatment means to the third flocculation treatment means when the second flocculation treatment means, the clarification membrane device, and the reverse osmosis membrane device stop operating.
[3] The apparatus for treating fluorine-containing wastewater according to [1] or [2], including a dilute water supply means provided on a primary side of the reverse osmosis membrane device.
[4] A method for treating fluorine-containing wastewater, which treats fluorine-containing wastewater with the apparatus for treating fluorine-containing wastewater according to any one of [1] to [3].

### Effects of the Invention

In the apparatus and method for treating fluorine-containing wastewater of the present invention, the fluorine-containing wastewater is subjected to flocculation and precipitation treatments using an inorganic flocculant and a calcium compound, and after further flocculation treatment using an inorganic flocculant, the treated water is subjected to a solid-liquid separation treatment and an RO treatment, and the RO permeate is recovered. In addition, the RO concentrate is further subjected to flocculation and precipitation treatments with an inorganic flocculant.

Since the flocculation and solid-liquid separation treatments are performed in two stages before the RO treatment, clogging of the RO membrane is suppressed. The permeate that has been subjected to the RO treatment can be recovered and reused.

Since the RO concentrate is further subjected to flocculation and solid-liquid separation treatments (flocculation and solid-liquid separation treatments in the third stage), the fluorine concentration in this treated water becomes sufficiently low.

In one aspect of the present invention, when the line between the flocculation/solid-liquid separation treatment and RO treatment in the second stage has stopped, the treated water of the flocculation/solid-liquid separation treatment in the first stage can be sent to the flocculation/solid-liquid separation treatment in the third stage, thereby obtaining treated water with a low fluorine concentration.

### BRIEF DESCRIPTION OF DRAWINGS

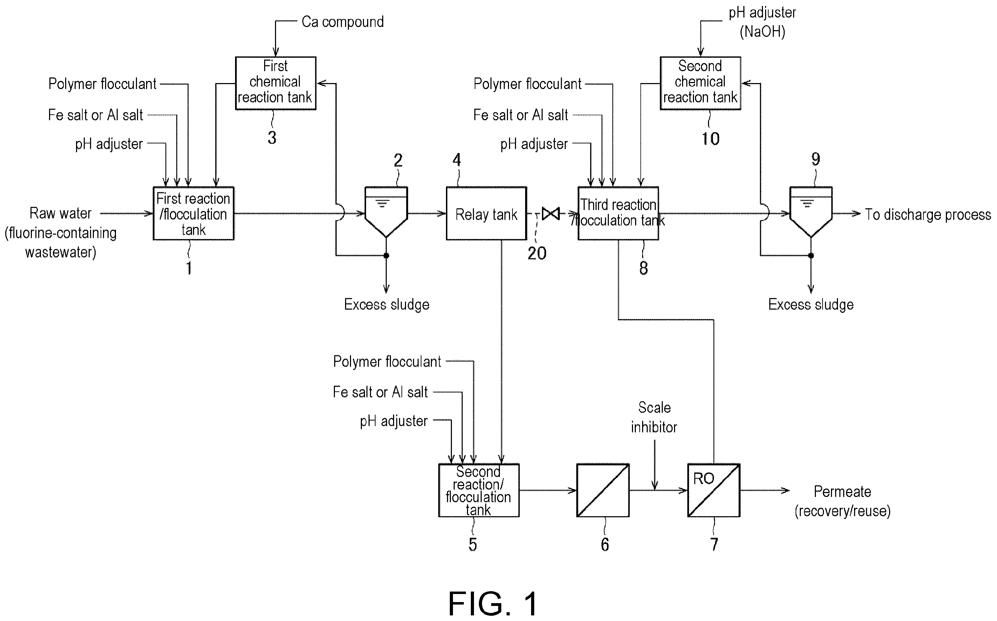

[FIG. 1] FIG. 1 is a flow diagram showing an embodiment of an apparatus for treating fluorine-containing wastewater according to the present invention.

### DESCRIPTION OF EMBODIMENTS

FIG. 1 is a flow diagram showing an embodiment of an apparatus for treating fluorine-containing wastewater according to the present invention.

The fluorine-containing wastewater to be treated in the present invention is preferably wastewater discharged from electronic industrial fields such as electronic displays, semiconductors, and the like. The fluorine concentration in the fluorine-containing wastewater is typically 20 mg-F/L to 1000 mg-F/L, particularly about 150 mg-F/L to 800 mg-F/L.

In a first reaction/flocculation tank 1, the raw water (fluorine-containing wastewater) is treated at pH 8 to 11 by adding Fe salts such as FeCl₃ and FeSO₄ or Al salts such as PAC and aluminum sulfate, an anionic polymer (organic polymer) flocculant, a pH adjuster, and modified sludge that has been densified by reaction with a calcium compound circulated from a first chemical reaction tank 3, thereby generating insoluble substances such as calcium fluoride.

As the acid and alkali used for the pH adjuster, acid and alkali generally used in a normal water treatment can be used. For example, acids such as hydrochloric acid and sulfuric acid, and alkalis such as alkali metal hydroxides like sodium hydroxide and potassium hydroxide can be used.

The flocculation liquid from the first reaction/flocculation tank 1 is then subjected to solid-liquid separation in a first precipitation tank 2. Among the separated sludge after solid-liquid separation, excess sludge is sent to a sludge treatment process, but a portion of the separated sludge is sent to the first chemical reaction tank 3 and mixed with a calcium compound. The modified sludge that has been densified by reaction between the sludge and the calcium compound is circulated to the first reaction/flocculation tank 1.

As the calcium compound, calcium hydroxide, calcium chloride, etc. can be used. The addition amount of the calcium compound is preferably about 120% to 1500%, particularly about 130% to 280% of the reaction equivalent of fluoride ions flowing into the first reaction/flocculation tank 1. However, in a case where substances that consume calcium, such as phosphoric acid and sulfuric acid, are included in the raw water, it is preferable to consider the amount consumed by these.

The first solid-liquid separated water (supernatant water) that has been subjected to solid-liquid separation in the first precipitation tank 2 is sent to a second reaction/flocculation tank 5 via a relay tank 4. The F concentration in this first solid-liquid separated water is preferably about 5 mg/L to 50 mg/L. The flow rate of the first solid-liquid separated water is preferably about 30 m³/h to 500 m³/h.

In the second reaction/flocculation tank 5, Fe salts such as FeCl₃ and FeSO₄ or Al salts such as PAC and aluminum sulfate, an anionic polymer (organic polymer) flocculant, and a pH adjuster are added, and the pH is adjusted to 5 to 9 to perform a flocculation treatment.

After the flocculation liquid is clarified by a clarification membrane device 6 such as MF membrane and UF membrane, a scale dispersant such as phosphonic acids like 2-phosphonobutane-1,2,4-tricarboxylic acid or polyacrylic acid is added, and then the liquid is subjected to an RO treatment in an RO device 7, and separated into permeate and concentrate. The recovery rate of the RO device 7 (permeate/inflow water × 100%) is preferably about 50% to 90%. The permeate can be reused as raw water for facility water or ultrapure water production. The addition amount of the scale dispersant to the clarification treated water of the clarification membrane device 6 is about 10 mg/L to 1000 mg/L.

The clarification membrane device 6 includes a backwashing mechanism, and backwashing is performed intermittently. This backwash wastewater is sent to the first reaction/flocculation tank 1.

The RO device 7 may be an RO device with a flushing mechanism using dilute water. If the RO device 7 is an RO device with a flushing mechanism, the adhesion of CaF₂ scale is suppressed by flushing.

For flushing, it is preferable to pass dilute water through the primary side of the RO membrane device for about 5 minutes to 60 minutes at a membrane surface flow velocity of about 0.001 m/s to 1 m/s. The dilute water is an unsaturated liquid with a saturation index of the scale species (here, calcium fluoride) below zero, and it is preferable to use the permeate from the RO membrane device, but pure water, city water, industrial water, etc. prepared separately can also be used. The pH of the dilute water is preferably 3.2 or less.

Flushing may be performed at predetermined time intervals set in advance, but it is preferable to perform flushing at a timing when scale is generated in the RO membrane device.

The concentrate of the RO device 7 is sent to a third reaction/flocculation tank 8, and in the third reaction/flocculation tank 8, Fe salts such as FeCl₃ and FeSO₄ or Al salts such as PAC and aluminum sulfate, an anionic polymer (organic polymer) flocculant, a pH adjuster, modified sludge from a second chemical reaction tank 10, and calcium salt as needed are added, and treated at pH 8 to 11, thereby generating insoluble substances such as calcium fluoride.

The flocculation liquid from the third reaction/flocculation tank 8 is then subjected to solid-liquid separation in a second precipitation tank 9. Among the separated sludge after solid-liquid separation, excess sludge is sent to a sludge treatment process, but a portion of the separated sludge is sent to a second chemical reaction tank 10 and mixed with a pH adjuster such as NaOH. In the second chemical reaction tank 10, by mixing with NaOH, the sludge reacts with NaOH to become high-density modified sludge. This modified sludge is circulated to the third reaction/flocculation tank 8.

The supernatant water that has been solid-liquid separated in the second precipitation tank 9 is sent to a discharge process. In this discharge process, the supernatant water is adjusted to a neutral pH in a pH adjustment tank (not shown), and discharged into rivers, etc. after passing through a monitoring tank (not shown).

In this embodiment, a bypass line 20 is provided to transfer water in the relay tank 4 to the third reaction/flocculation tank 8 when the second reaction/flocculation tank 5, the clarification membrane device 6, and the RO device 7 are not operating. In a case where the second reaction/flocculation tank 5, the clarification membrane device 6, and the RO device 7 are not operating, the LV of the second precipitation tank 9 is preferably about 0.5 m/h to 4 m/h.

According to the apparatus for treating fluorine-containing wastewater configured as described above and the treatment method using this apparatus, fluorine-containing wastewater is treated by the first flocculation precipitation treatment using the first reaction/flocculation tank 1, the first precipitation tank 2, and the first chemical reaction tank 3, the supernatant water from this first precipitation tank 2 is further subjected to the flocculation treatment in the second reaction/flocculation tank 5, and this flocculation liquid is treated by the clarification membrane device 6 and subjected to the RO treatment in the RO device 7. Therefore, the F concentration in the treated water (permeate) from the RO device 7 becomes sufficiently low. In addition, since the inflow water to the RO device 7 has been subjected to the flocculation treatment and solid-liquid separation treatment in two stages, clogging of the RO membrane is suppressed. In particular, the scale risk of the RO device 7 is further reduced by equipping the RO device 7 with a flushing mechanism or by adding a scale inhibitor to the RO inflow water.

In addition, in this embodiment, the inflow water to the RO device 7 is the flocculation liquid of the second reaction/flocculation tank 5 that has been clarified by the clarification membrane device 6, so membrane clogging due to residual colloidal components or polymers derived from polymer flocculants is suppressed.

In this embodiment, the RO concentrate can be treated by the third reaction/flocculation tank 8, the second precipitation tank 9, and the second chemical reaction tank 10 to obtain discharged water with sufficiently reduced F concentration.

Additionally, in this embodiment, in a case where the second reaction/flocculation tank 5, the clarification membrane device 6, and the RO device 7 stop operating, the F concentration in the supernatant water from the second precipitation tank 9 can be made sufficiently low by setting the design LV of the second precipitation tank 9 to 0.5 m/h to 4 m/h.

In the present invention, multiple RO devices 7 may be provided in parallel. In this case, while passing treated water (clarification treated water of the clarification membrane device 6) through some of the RO devices to produce desalinated water, dilute water may be passed from a dilute water tank through other RO devices for cleaning, and the cleaning wastewater may be returned to the dilute water tank.

In a case where the water quality of dilute water in the dilute water tank becomes higher in salt concentration than a predetermined value, a portion of the dilute water is discharged and merged with the raw water tank or relay tank, while new dilute water is supplied. The permeate of the RO device is used as the dilute water.

In the above embodiment, both the first reaction/flocculation tank 1 and the third reaction/flocculation tank 8 are based on the high-density sludge method (HDS method), but either one or both of the reaction/flocculation tanks may be simple flocculation tanks that do not return sludge from the precipitation tanks. In a case where the first reaction/flocculation tank 1 is a simple flocculation tank, a calcium compound such as calcium hydroxide is added to the first reaction/flocculation tank 1.

While the present invention has been described in detail using specific embodiments, it is apparent to those skilled in the art that various modifications are possible within the range where the effects of the invention are achieved.

This application is based on Japanese Patent Application No. 2023-050168 filed on March 27, 2023, the entirety of which is incorporated herein by reference.

### Description of Reference Numerals

1 first reaction/flocculation tank
2 first precipitation tank
3 first chemical reaction tank
5 second reaction/flocculation tank
6 clarification membrane device
7 RO device
8 third reaction/flocculation tank
9 second precipitation tank
10 second chemical reaction tank
20 bypass line

## Claims

1. An apparatus for treating fluorine-containing wastewater, comprising:
a first flocculation treatment means which performs a flocculation treatment on fluorine-containing wastewater with an inorganic flocculant and a calcium compound; a first precipitation treatment means which subjects a flocculation reaction liquid from the first flocculation treatment means to precipitation separation;
a second flocculation treatment means which adds an inorganic flocculant to at least a portion of treated water from the first precipitation treatment means and performs a flocculation treatment;
a clarification membrane device which performs a membrane separation treatment on a flocculation reaction liquid from the second flocculation treatment means;
a reverse osmosis membrane device to which membrane permeate of the clarification membrane device is supplied and which separates the membrane permeate into permeate and concentrate;
a means which extracts permeate from the reverse osmosis membrane device;
the third flocculation treatment means which is installed separately from the first flocculation treatment means and performs a flocculation treatment on concentrate from the reverse osmosis membrane device with an inorganic flocculant; and a second precipitation treatment means which subjects a flocculation reaction liquid from the third flocculation treatment means to precipitation separation.

2. The apparatus for treating fluorine-containing wastewater according to claim 1, comprising a bypass means for sending treated water from the first precipitation treatment means to the third flocculation treatment means when the second flocculation treatment means, the clarification membrane device, and the reverse osmosis membrane device stop operating.

3. The apparatus for treating fluorine-containing wastewater according to claim 1 or 2, comprising a dilute water supply means provided on a primary side of the reverse osmosis membrane device.

4. A method for treating fluorine-containing wastewater, which treats fluorine-containing wastewater with the apparatus for treating fluorine-containing wastewater according to claim 1 or 2.
